# DEMANDE DE BREVET EUROPEEN

(11) **EP 2 323 111 A1**
(43) Date de publication de la demande: **18.05.2011**
(21) Numéro de dépôt: 09306000.2
(22) Date de dépôt: 22.10.2009
(51) Int. Cl.: G07F 7/10, G07C 9/00

(54) **Dispositif portable d'authentification multi-applications**

(71) Demandeur: Gemalto SA, 92190 Meudon (FR)
(72) Inventeur: Barbe, Serge, 92197, Meudon Cedex (FR); Chafer, Sylvain, 92197, Meudon Cedex (FR); Martin, Michel, 92197 Meudon Cedex (FR); Amiel, Patrice, 92197, Meudon Cedex (FR); Nemec, Jan, 92197, Meudon Cedex (FR)

(57) **Abrégé**

L'invention permet de faire coexister sur une même carte plusieurs applications dont la mise en oeuvre fait appel à des lectures et écritures de données faites par le lecteur à un même emplacement de mémoire. L'invention est un procédé d'échange de données entre un dispositif portable d'authentification 3 supportant plusieurs applications Z1 à Z3 et un lecteur dédié à une application dans lequel le lecteur envoie une commande d'authentification et au moins une commande de lecture et/ou écriture. La commande d'authentification permet au dispositif portable d'autoriser une transaction pour au moins une partie d'une application Z1 à Z3 supportée par ledit dispositif portable. En réponse à la commande d'authentification, le dispositif portable sélectionne l'application du dispositif qui correspond au lecteur. La commande de lecture et/ou d'écriture se fait en adressant un bloc de données déterminé. En réponse à la commande de lecture et/ou d'écriture, le dispositif portable adresse le bloc de l'application sélectionnée.

## Description

L'invention se rapporte à un dispositif portable d'authentification multi-applications.

Les dispositifs portables d'authentification sont des dispositifs électroniques comportant un circuit permettant de s'authentifier auprès d'un dispositif lecteur pour autoriser un service ou un accès à un service. Typiquement, les dispositifs portables d'authentification peuvent avoir différents facteurs de forme tel que carte à puce, carte à mémoire, clef USB, étiquette électronique, passeport ou autre...

Parmi les dispositifs portables d'authentification, il existe différents niveau de complexité. Les cartes bancaires, cartes SIM ou passeports électroniques font partis des dispositifs complexes et ils disposent d'une puce relativement évoluée et couteuse. Les traitements applicatifs sur les données sont effectués directement par la carte et tout accès aux données passe par un traitement d'information préalable effectué par le système d'exploitation de la carte.

Pour d'autres application, nécessitant moins de sécurisation et ayant des contraintes physiques et financières différentes des cartes complexes, il est préféré d'avoir une puce moins complexe. Le facteur de forme peut être du type « étiquette électronique », c'est-à-dire un support souple en carton ou en plastique nécessitant une puce de taille très réduite pour limiter les risques de casse. A titre d'exemple, c'est le cas des cartes de transport ou encore de carte d'accès physique tel que ticket d'accès à des musées ou autres. De par le nombre de cartes qui doivent être fabriquées en fonction du service associé, ces cartes doivent avoir un coût très réduit pour éviter un surcoût sur le service.

Ainsi, il a été développé des cartes très simplifiées qui sont limitées à une authentification simplifiée et au stockage d'une structure de données propre à l'application. Chaque application ayant été définie indépendamment d'une application de même nature, Il en découle que les structures de données associées à deux applications A et B sont disposées dans les cartes sans aucune cohérence respective. Il en découle que deux applications A et B peuvent posséder dans leurs cartes des structures de données similaires, a sémantique différente, positionnées a des emplacements identiques ou se chevauchant.

Pour ce type d'application, une transaction est entièrement contrôlée par le lecteur. La transaction consiste essentiellement en une combinaison de lectures et d'écritures sur la ou les structures de données portées par la carte. Préalablement à tout enchainement de lecture ou d'écriture, une phase d'authentification permet au lecteur de vérifier l'authenticité de la carte et plus précisément de la structure de donnée qu'elle porte. Lors de la commande d'authentification, le lecteur précise la zone de données sur laquelle il souhaite s'authentifier. Et potentiellement la carte peut vérifier l'authenticité du lecteur et donc de l'infrastructure par exemple par un échange de clef.

Ainsi, lorsqu'une carte d'une application A est présentée devant un lecteur d'une application B, le lecteur n'authentifiant pas les données de l'application B, la transaction applicative ne peut s'effectuer. La carte A n'est donc opérante que sur l'infrastructure A. Elle est dite mono-applicative.

Dans le cas ou l'on souhaiterait qu'une carte C embarque à la fois l'application A et l'application B, par exemple pour avoir un titre de transport compatible sur deux réseaux différents, le positionnement des données des deux applications A et B sur une même zone ou sur deux zones qui se chevauchent interdit l'utilisation des deux applications simultanément. Ainsi deux réseaux de transport d'une même ville ou de deux villes voisines ne peuvent pas être interconnectés en utilisant un même titre de transport sans changer la totalité de leur infrastructure.

L'invention vise à permettre de faire coexister sur une même carte au moins deux applications dont la mise en oeuvre fait appel à des lectures et écritures de données faites par le lecteur à un emplacement de mémoire définis par le lecteur. Le mécanisme mis en oeuvre par l'invention consiste à définir un décalage d'adresse suite à une étape d'identification entre le lecteur et la carte puis à affecter ce décalage aux adresses de lecture ou d'écriture du lecteur. Un tel décalage permet de transformer l'adressage des données faites par le lecteur en un adressage virtuel et de faire correspondre deux zones de mémoires distinctes sur la carte et permet d'éviter de changer toute l'infrastructure.

Plus particulièrement l'invention est un procédé d'échange de données entre un dispositif portable d'authentification supportant plusieurs applications et un lecteur dédié à une application dans lequel le lecteur envoie une commande d'authentification et au moins une commande de lecture et/ou écriture. La commande d'authentification permet au dispositif portable d'autoriser une transaction pour au moins une partie d'une application supportée par ledit dispositif portable. La commande de lecture et/ou d'écriture se fait en adressant un bloc de données déterminé. En réponse à la commande d'authentification, le dispositif portable sélectionne l'application du dispositif qui correspond au lecteur. En réponse à la commande de lecture et/ou d'écriture, le dispositif portable adresse le bloc de l'application sélectionnée.

Selon différents modes de réalisation, le dispositif portable peut appliquer la commande d'authentification de manière successive à chaque application et sélectionne la première application où la commande d'authentification réussie. Le dispositif portable peut appliquer la commande d'authentification à chaque application dans un ordre prédéterminé. La commande d'authentification peut être appliquée à une application uniquement si l'authentification demandée est possible. Chaque application peut être associée à une structure de donnée située dans une zone mémoire et dans lequel, l'authentification peut se faire pour une partie des données situées dans ladite zone mémoire.

Selon un autre aspect, l'invention est un dispositif portable d'authentification comportant au moins un circuit de communication, au moins une mémoire accessible et un circuit d'authentification. Le circuit de communication permet audit dispositif de communiquer avec un lecteur. La mémoire comporte au moins deux zones de mémoire disposant chacune d'une structure de donnée correspondant à une application, chaque structure comportant au moins un bloc de données associé à une clef. Le circuit d'authentification est apte à authentifier un lecteur vis-à-vis d'une clef. Le circuit d'authentification sélectionne de manière automatique l'application correspondant au lecteur. Une opération de lecture et/ou d'écriture subséquente s'effectue dans la structure de l'application sélectionnée.

Selon différents modes de réalisation, le circuit d'authentification peut effectuer la sélection de l'application en testant une clef dans chaque application de manière successive. Un bloc d'une structure peut comporter un identifiant permettant de le repérer dans ladite structure et dans lequel l'authentification est faite pour une application uniquement si un bloc de la structure comporte le même identifiant. Le dispositif peut en outre comporter un moyen de détermination de priorité des applications en fonction des dernières authentifications effectuées.

L'invention sera mieux comprise à la lecture de la description qui va suivre en se référant aux dessins annexes, parmi lesquels:
- la figure 1 représente un exemple de lecteur et de dispositif portable,
- la figure 2 représente un premier mode de réalisation d'un dispositif portable selon l'invention,
- la figure 3 représente un troisième mode de réalisation d'un dispositif portable selon l'invention, et
- la figure 4 représente un plan de mémoire d'un dispositif portable selon l'invention.

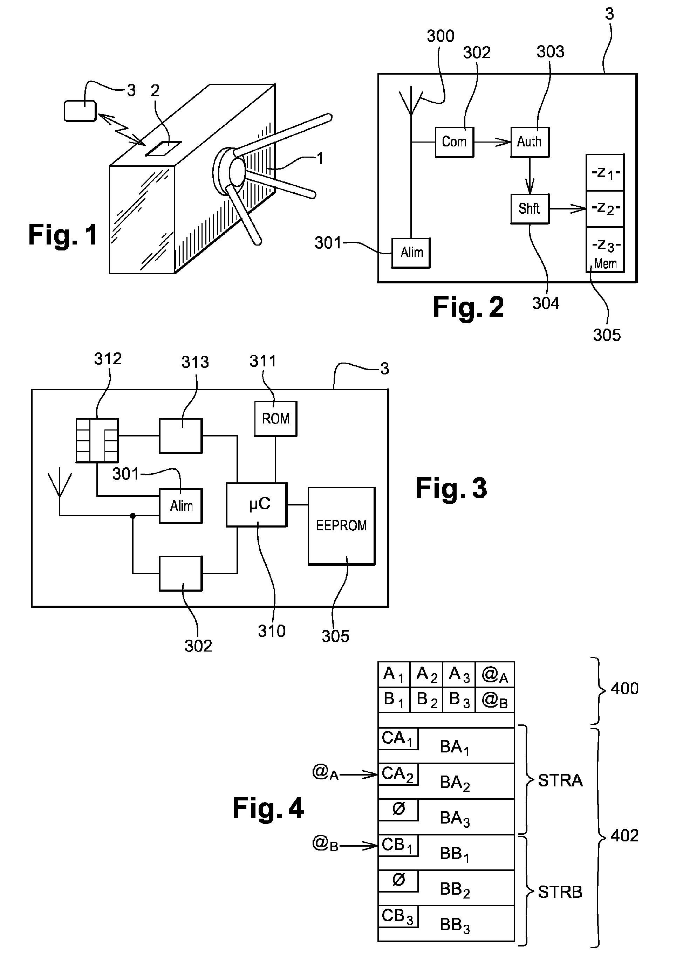

Comme indiqué précédemment, le dispositif portable objet de l'invention est un dispositif portable d'identification par exemple pour un réseau de transport. La figure 1 montre une infrastructure d'accès 1 à un réseau de transport qui comporte un lecteur 2 qui communique avec un dispositif portable 3. Ici le lecteur 2 est un lecteur sans contact destiné à communiquer avec un titre de transport qui peur être soit une carte à puce sans contact, soit un ticket de type étiquette électronique.

Classiquement, le lecteur pilote une transaction en alimentant la carte et en lui faisant une demande d'authentification. Suivant les réseaux de transport, la demande d'identification peut varier. Ainsi l'authentification peut se faire de différente manière en identifiant soit un type de structure de données, soit l'application ou service proposé par le lecteur. En réponse, la carte peut répondre par un simple « oui » ou demander au lecteur de lui fournir un code d'accès.

Comme indiqué précédemment, beaucoup de réseau de transport utilisent une structure de données qui leur est propre, ont des identifiants d'application ou de service qui leur sont propres. Le dispositif portable objet de l'invention vise à être utilisé avec plusieurs types de réseau de transport. Ainsi, cette phase d'authentification peut permettre au dispositif portable de savoir quel type d'application va être utilisé pour pouvoir se configurer en conséquence.

La figure 2 représente un premier mode de réalisation, par exemple sous forme d'étiquette électronique cartonnée. Il convient alors d'avoir un circuit électronique très petit et donc chaque élément du circuit est réduit à sa plus simple expression. Le dispositif 3 comporte ici une antenne 300 reliée d'une part à un circuit d'alimentation 301 et d'autre part à un circuit de communication 302. Le circuit d'alimentation 301 permet de récupérer une tension d'alimentation et de la fournir aux autres circuits afin de permettre à ceux-ci de fonctionner.

Le circuit de communication permet de moduler et démoduler les signaux transmis puis de les transmettre à un circuit d'authentification 303 et à une mémoire 305 via un circuit de translation 304. Lorsqu'une communication s'établie avec le dispositif portable, le premier message arrive au circuit d'authentification 303. A titre d'exemple, ce premier message correspond à une demande d'identification d'une structure de données. Si la structure de données correspond à une structure de données contenue dans la carte alors le circuit d'authentification renvoie un message au lecteur, via le circuit de communication 302 puis il détermine un décalage d'adresse qu'il fournit au circuit de translation 304. Les messages suivant envoyés par le lecteur seront ensuite envoyés à la mémoire 305 qui contient les données applicatives. En traversant le circuit de translation 304 les adresses de lecture et/ou d'écriture fournies par le lecteur sont affectées du décalage déterminé par le circuit d'authentification 303. Le décalage est par exemple réalisé en effectuant une simple addition sur l'adresse demandée d'une valeur correspondant au décalage déterminé.

A titre d'exemple, le dispositif portable permet dispose de trois structure de données placées respectivement dans des zones Z1, Z2 et Z3 de la mémoire. Chaque structure de données correspond à une application différente. Pour une application A, il est prévu de stocker la structure de données A dans une mémoire à partir de l'adresse @A. Dans le dispositif portable, la structure de données A est par exemple placées dans la zone Z1 qui commence par exemple à l'adresse @1 de la mémoire 305. Le circuit d'authentification ayant identifié l'application A fournira alors au circuit de translation une valeur de décalage égale à @1-@A, cette valeur pouvant être négative.

Si par contre le circuit d'authentification a identifié qu'il s'agit d'une application B dont la structure de données devrait être placée à une adresse @B et que cette structure de données est en fait placée dans la zone Z3 et commence à l'adresse @3, alors le décalage calculé sera égal à @3-@B.

Un tel dispositif portable permet ainsi d'embarquer deux ou trois applications différentes.

La figure 3 représente une variante de réalisation qui permet de reprogrammer le dispositif portable à volonté et donc de permettre plus de souplesse d'emploi. Une partie des circuits du dispositif représenté sur la figure 2 sont remplacés par un coeur de microcontrôleur 310 muni d'une mémoire ROM 311. La figure 3 un dispositif portable selon l'invention qui correspond par exemple à une carte à puce mixte, c'est-à-dire disposant d'une interface à contact et d'une interface sans contact. L'interface sans contact comporte une antenne 300 et un premier circuit de communication 302. L'interface à contact comporte un connecteur 312 et un deuxième circuit de communication 313. L'antenne 300 et le connecteur 312 sont tous deux reliés à un circuit d'alimentation 301 qui fournit l'alimentation aux autres circuits. Les premier et deuxième circuits de communication 302 et 313 sont tous deux reliés au coeur de microcontrôleur 310 qui émule les circuits d'authentification 303 et de translation 304 présenté sur la figure 2. La mémoire ROM 311 comporte le microcode nécessaire au coeur de microcontrôleur 310 pour émuler lesdits circuits. La mémoire applicative 305 contient les structures de données des applications supportées par le dispositif portable. La mémoire applicative 305 est une mémoire non volatile et réinscriptible, par exemple de type EEPROM.

A titre d'exemple la figure 4 illustre un plan de stockage d'information dans la mémoire 305. Dans cet exemple, seul deux structures de données STRA et STRB correspondant respectivement à une application A et à une application B sont représentées. Chaque structure de données STRA et STRB comporte est divisé en blocs de données, dans l'exemple trois blocs par structure : BA1, BA2 et BA3 sont les blocs de la structure STRA ; et BB1, BB2, BB3 sont les blocs de la structure STRB. Il est à noté que tous les blocs de chaque structure peuvent ne pas être utilisés. C'est le cas dans l'exemple pour les blocs BA3 et BB2 qui sont des blocs inutilisés.

Lorsqu'un bloc de données d'une structure de données est utilisé, alors une clef est associée au bloc pour n'autorisé l'accès qu'à des lecteurs capable de s'authentifier avec cette clef. Le lecteur 2 envoie une première commande d'authentification qui permet au dispositif portable d'autoriser une transaction pour une application prédéfinie.

Ainsi, l'application A correspondant à la structure de données STRA comporte une clef CA1 associée au bloc BA1, et une clef CA2 associée au bloc BA2. L'application B correspondant à la structure de données STRB comporte une clef CB1 associée au bloc BB1, et une clef CB3 associée au bloc BB3. Lorsqu'un lecteur de données souhaite s'authentifier, celui-ci identifie un bloc et donne sa clef d'authentification. Si la clef donnée correspond à la clef mémorisée alors l'authentification a réussi. Pour déterminer automatiquement l'application qui correspond au lecteur, le microcontrôleur 310 qui émule un circuit d'authentification va tenter de s'authentifier de manière successive auprès de chaque application jusqu'à ce que l'authentification réussisse. En réponse à la commande d'authentification, le microcontrôleur 310 de la carte 3 sélectionne l'application du dispositif qui correspond au lecteur.

Ainsi selon un premier exemple de réalisation, si une demande d'authentification est faite pour le premier bloc d'une structure de données le microcontrôleur tente l'authentification avec la clef CA1 du premier bloc BA1 de la structure STRA, si l'authentification marche alors l'application sélectionnée correspond à l'application A. Si cette authentification ne marche pas alors le microcontrôleur tente l'authentification avec la clef CB1 du premier bloc BB1 de la structure STRB, si l'authentification marche alors l'application sélectionnée correspond à l'application B. Si d'autres applications étaient présentes alors les premières clefs des applications seraient aussi testées et lorsque la dernière application est testée sans succès alors un message d'erreur est renvoyé.

Si l'authentification est réussie, par exemple auprès de l'application B alors le lecteur 2 envoie une commande de lecture et/ou d'écriture dans le bloc de données auprès duquel il s'est préalablement identifié. En réponse à la commande de lecture et/ou d'écriture, le microcontrôleur adresse le bloc correspondant de l'application B ainsi sélectionnée.

Afin de trouver plus rapidement l'application sélectionnée, il convient de déterminer un ordre de priorité pour tester les différentes applications. Préférentiellement, chaque fois qu'une authentification est réussie, on mémorise que la première application à tester est celle qui vient d'être sélectionnée. Si aucune application n'est sélectionnée alors l'ordre de priorité des applications reste inchangé. Dans le cas d'un usager évoluant dans un même réseau pendant une période de temps, le processus d'authentification sera donc plus performant en terme de temps d'accès.

Dans le cas où le test de toutes les structures de données mémorisées serait trop long, il est toujours possible d'envoyer des messages erronés afin que l'utilisateur puisse représenter à nouveau la carte au lecteur en permettant ainsi de rallonger le temps nécessaire à l'authentification. Dans ce cas, la carte mémorisera de manière temporaire, par exemple à l'aide d'un registre à quelle application il faut recommencer la séquence de test.

Selon une variante, les tests d'authentification continuent après l'envoie du message indiquant que l'authentification a échoué de sorte que le microcontrôleur puisse mémoriser l'application qui convient avant de représenter à nouveau la carte au lecteur. Si l'on considère les quelques dizaines millisecondes nécessaires pour effectuer le test pour toutes les applications par rapport au geste d'un utilisateur de l'ordre de la seconde pour retirer et représenter la carte, l'authentification lors de la deuxième présentation de la carte commence forcément par la bonne application sélectionnée.

On notera que la sélection de l'application ainsi effectuée par le mécanisme de l'authentification, ne nécessite pas d'intervention du porteur de la carte autre qu'une éventuelle double présentation de la carte devant le lecteur.

L'homme du métier pourra remarquer que lorsqu'un bloc de données est vide le test d'authentification peut s'effectuer plus rapidement car la clef correspond à une clef nulle. Toutefois, il est possible que la mémoire non utilisée comporte une donnée non effacée qui corresponde à une fausse clef. Afin d'éviter de perdre inutilement du temps, un deuxième exemple de réalisation consiste à séparer la mémoire 305 en deux zones 400 et 402, la première zone 400 comportant une table représentative des structures de données STRA et STRB placées dans la deuxième zone 402. Le tableau de la première zone comporte ainsi des indicateurs Ai et Bi représentant l'occupation des différents blocs des structures de données STRA et STRB. Ainsi, avant que le microcontrôleur 310 tente une authentification à l'aide de la clef d'un bloc, il vérifie si le bloc est occupé dans la table. L'information A3 associée au bloc BA3 permet ainsi au microcontrôleur d'éviter de tester la clef du bloc BA3.

L'utilisation d'une table permet aussi de mémoriser une ou plusieurs adresses pour chaque structure. A titre d'exemple, on peut mémoriser l'adresse @A ou @B de début de structure STRA ou STRB. L'adresse peut servir à identifier la structure et donc l'application, un simple décalage à l'adresse @A ou @B permet de passer d'une application à une autre. En outre il n'est pas nécessaire de placer les différentes structures à des adresses consécutives dans la mémoire, ce qui permet plus de souplesse pour l'ajout d'application. L'homme du métier pourra noter qu'il est aussi possible d'utiliser dans ce tableau une adresse pour chaque bloc considéré.

Il est à noter qu'il est possible d'avoir une gestion plus complexe des structures de données avec une carte utilisant un micro contrôleur. Le coeur de microcontrôleur 310 gère l'intégralité des accès à la mémoire 305 aussi il est possible d'avoir recours à un adressage logique intermédiaire qui permet d'optimiser la gestion de la mémoire EEPROM. Une structure de données peut être placée sur deux zones de mémoires disjointes.

Une carte à microcontrôleur effectuant la translation logique explicitée précédemment permet d'avoir beaucoup de souplesse d'utilisation. A titre d'exemple non limitatif, il est possible de mettre en place des variantes d'implémentation pour permettre :
- d'ajouter une nouvelle application en ajoutant simplement une nouvelle structure de donnée associée et une ligne supplémentaire dans la liste,
- d'ajouter des éléments de données supplémentaires à une application existante comme par exemple l'extension des données d'une application de transport,
- d'avoir une structure de donnée d'une même application qui n'est pas être contigüe, il en va de la carte multiplicative de reconstruire la vue telle que l'infrastructure lecteur souhaite la voir,
- de supprimer une application ou une partie de l'application,
- d'avoir certains éléments de données qui appartiennent à plusieurs applications.

Entre autres variantes l'invention à été décrite en relation avec une carte à puce et une étiquette électronique, cependant, il va de soit que l'invention s'applique à tout dispositif électronique portable équivalent tel que par exemple une clef USB ou n'importe quel facteur de forme de carte à mémoire ou à microprocesseur dès lors que le dispositif portable comporte une mémoire accessible après une étape authentification faite par le lecteur qui accède aux données. Comme il a pu être vu au travers des exemples, le protocole de communication de type à contact ou sans contact importe peu.

## Revendications

1. Procédé d'échange de données entre un dispositif portable d'authentification (3) supportant plusieurs applications (Z1 à Z3, STRA, STRB) et un lecteur dédié (2) à une application dans lequel le lecteur (2) envoie:
- une commande d'authentification qui permet au dispositif portable (3) d'autoriser une transaction pour au moins une partie (BA1, BA2, BB1, BB3) d'une application (Z1 à Z3, STRA, STRB) supportée par ledit dispositif portable (3),
- au moins une commande de lecture et/ou d'écriture d'un bloc de données déterminé,
**caractérisé en ce que** :
- en réponse à la commande d'authentification, le dispositif portable (3) sélectionne l'application (Z1 à Z3, STRA, STRB) du dispositif qui correspond au lecteur, et
- en réponse à la commande de lecture et/ou d'écriture, le dispositif portable adresse le bloc de l'application sélectionnée (Z1 àZ3, STRA, STRB).

2. Procédé selon la revendication 1, dans lequel le dispositif portable applique la commande d'authentification de manière successive à chaque application et sélectionne la première application où la commande d'authentification réussie.

3. Procédé selon la revendication 2, dans lequel le dispositif portable applique la commande d'authentification à chaque application dans un ordre prédéterminé.

4. Procédé selon la revendication 2, dans lequel la commande d'authentification est appliquée à une application uniquement si l'authentification demandée est possible.

5. Procédé selon la revendication 1, dans lequel chaque application est associée à une structure de donnée (STRA, STRB) située dans une zone mémoire et dans lequel, l'authentification se fait pour une partie des données situées dans ladite zone mémoire.

6. Dispositif portable d'authentification (3) comportant :
- au moins un circuit de communication (302, 313) permettant audit dispositif de communiquer avec un lecteur (2),
- au moins une mémoire (305) accessible, ladite mémoire (305) comportant au moins deux zones de mémoire (Z1, Z2, Z3) disposant chacune d'une structure de donnée (STRA, STRB) correspondant à une application, chaque structure (STRA, STRB) comportant au moins un bloc de données (BA1, BA2, BB1, BB3) associé à une clef (CA1, CA2, CB1, CB3),
- un circuit d'authentification (303, 310, 311) apte à authentifier un lecteur (2) vis-à-vis d'une clef (CA1, CA2, CB1, CB3),
**caractérisé en ce que** le circuit d'authentification (303, 310, 311) sélectionne de manière automatique l'application correspondant au lecteur, et **en ce qu'**une opération de lecture et/ou d'écriture subséquente s'effectue dans la structure de l'application sélectionnée.

7. Dispositif selon la revendication 6, dans lequel le circuit d'authentification effectue la sélection de l'application en testant une clef (CA1, CA2, CB1, CB3) dans chaque application de manière successive.

8. Dispositif selon la revendication 7, dans lequel un bloc d'une structure (STRA, STRB) comporte un identifiant permettant de le repérer dans ladite structure et dans lequel l'authentification est faite pour une application uniquement si un bloc de la structure comporte le même identifiant.

9. Dispositif selon la revendication 7, lequel comporte un moyen de détermination de priorité des applications en fonction des dernières authentifications effectuées.
